**Europäisches Patentamt**

**European Patent Office**

**Office européen des brevets**

(19)

(11) **EP 1 465 186 A1**

(12) **EUROPEAN PATENT APPLICATION**

(43) Date of publication:
**06.10.2004 Bulletin 2004/41**

(51) Int Cl.$^7$: **G11B 20/10**

(21) Application number: **03007593.1**

(22) Date of filing: **02.04.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK RO**

(71) Applicant: **DEUTSCHE THOMSON-BRANDT GMBH**
**78048 Villingen-Schwenningen (DE)**

(72) Inventors:
• **Adolph, Dirk**
  **30952 Ronnenberg (DE)**

• **Schiller, Harald**
  **30539 Hannover (DE)**
• **Hörentrup, Jobst**
  **30161 Hannover (DE)**
• **Ostermann, Ralf**
  **30167 Hannover (DE)**
• **Peters, Hartmut**
  **30890 Barsinghausen (DE)**

(74) Representative: **Rittner, Karsten, Dr.**
**Deutsche Thomson-Brandt GmbH,**
**European Patent Operations,**
**Karl-Wiechert-Allee 74**
**30625 Hannover (DE)**

(54) **Method for buffering data streams read from an optical storage medium**

(57)    A method for optimizing a scheduler for an optical pick-up reduces switch times required for seamless video angle switching. The pick-up reads data streams from different files on an optical storage medium, e.g. Blu-Ray disc. Seamless video angle switching requires reading and buffering a new video data stream from another file, delaying the switch to be visible. Labels that mark entry points for seamless angle switching are attached to the video stream (R), and are stored together with the video data in a buffer (B). When an angle switch is requested, and thus a switch to a new video data stream (A2), the scheduler determines the time ($t_{min}$) before data from the new data stream (A2) can be buffered, detects the next label (L2*), and stores the new data (A2) beyond the label (L2*), thus flushing non-relevant parts of the previous buffer contents.

Fig.4

## Description

Field of the invention

This invention relates to a method for operating a scheduler for an optical pick-up. The pick-up reads data streams from an optical storage medium, wherein the data streams belong to different data types like audio, video, subtitles or other data, and are distributed to several files on the storage medium.

Background

Pre-recorded or self-recorded optical discs may support "Out Of Multiplex" (OOM) formats. Out of multiplex is a format that stores different streaming components, e.g. video, audio and subtitles, on different locations on the disc, i.e. different files. This is possible with various standardized media, e.g. Blu-ray disc or DVD. Also, a video technique known as multi-angle may be implemented. Multi-angle means that a video film may contain for certain scenes various alternative view angles, all running at a parallel time axis, which are selectable by the user and may be integrated seamlessly into the video.

To playback an OOM source, the pick-up has to read all required streams from the different locations, before the playback device decodes the streams by their specific decoders for synchronous representation. That means that the pick-up has to jump from stream to stream in order to serve all decoders simultaneously, without noticeable interruption of the presentation. Usually, a pick-up contains an actuator carrying an optical sensor, and the pick-up is movable by a mechanical drive for raw adjustment, while the actuator is separately movable for fine adjustment without a mechanical drive.

The straight forward solution for providing OOM technology with optical drives is buffer technique: additional stream buffers serve to bridge the times that are needed for jumping to the other requested streams and reading them. A typical example comprises three streams: video, audio and subtitles. E.g. the video buffer is dimensioned such that jumping to the audio stream, loading of the audio buffer, jumping to the subtitle stream, loading of the subtitle buffer and jumping back to the video stream can be executed without the video buffer running empty. The other buffers, e.g. for audio and subtitles, are dimensioned analogously.

Summary of the Invention

One problem arising from the fact that multiple files must be read simultaneously is the high pick-up jump frequency causing noise and wastage. A further problem is the delay appearing during seamless video angle switches. The delay is the time needed from requesting the video angle change until seeing the other video angle. It is determined mainly by the video buffer size, or by the amount of time until the video buffer has run empty and the new content reaches the video decoder. The same applies to the start up of OOM decoding. The time passing by from pressing the start button until effectively starting the display is quite long, since all buffers must be filled from scratch.

The problem to be solved by the invention is to provide a method for reducing delay times required for stream switching, e.g. video angle switch. This problem is solved by the method disclosed in claim 1. For a HDTV stream, being a typical application of blu-ray disc, the buffers are quite large. The large buffers cause a long delay for the user waiting for a requested angle change to get visible, which delay can be reduced by the inventive method. The same problem arises for the start-up of OOM decoding, and can be improved by the method disclosed in claim 1.

An apparatus utilizing the method is disclosed in claim 8.

The minimization of switching delay time for seamless video angle switches is reached by the introduction of angle switch labels within the video buffer. The angle switch labels are used to determine those parts of the video buffer which are obsolete in case of an angle switch, and can be removed, or overwritten, without the risk of a buffer under run. When the obsolete content has been removed from the video buffer, the buffer may be filled with the requested new content instead. Overwriting the obsolete data performs both steps simultaneously. This controlled replacement of obsolete content from the video buffer reduces the video angle switch time, because the decoder needs not to process the obsolete content.

Advantageously, the invention can also be used to optimize the partitioning of a given amount of buffering space for the described application.

Advantageous embodiments of the invention are disclosed in the dependent claims, the following description and the figures.

Brief description of the drawings

Exemplary embodiments of the invention are described with reference to the accompanying drawings, which show in

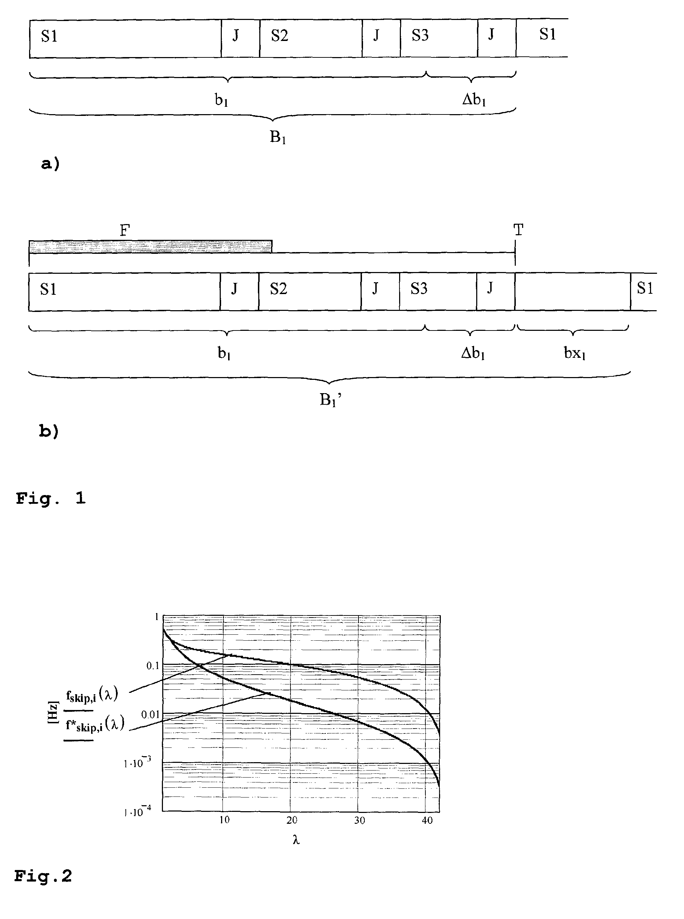

Fig.1 a) a bit stream buffer for bridging the jump and load times of three OOM streams, being dimensioned conventionally;

Fig.1 b) a bit stream buffer for bridging the jump and load times of three OOM streams, containing additional extension buffer space according to the invention;

Fig.2 a qualitative example for the resulting pick-up jump frequency, comparing equally shared extension buffers $f_{skip}$ and asymmetrically shared extension buffers $f^*_{skip}$;

Fig.3 a state-of-the-art video buffer model during video angle switch;

Fig.4 a) a video buffer model according to the invention, before a video angle switch; and

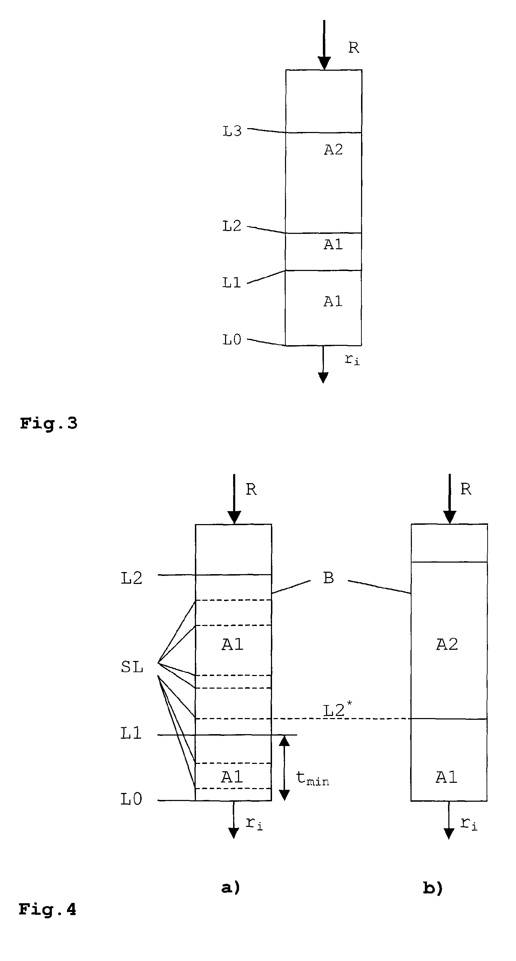

Fig.4 b) a video buffer model according to the invention, after a video angle switch.

## Detailed description of the invention

In the following, a detailed description of the invention including a detailed analysis of the problem is given.
OOM decoding is mainly influenced by the following mutually dependent parameters:

the pick-up maximum channel bit rate R,
the pick-up access time $T_{acc}$,
the pick-up jump frequency $f_{jump}$,
the resulting total buffer size $B_{\Sigma}$,
the number of separate streams N,
and the individual stream bit rate $r_i$.

The general approach for OOM decoding is to buffer all jump and loading times requested to serve all N streams decoded. Fig.1 a) shows an example for three streams. The base buffer $b_1$, e.g. for video, is enlarged by the bridge buffer $\Delta b_1$ which is dimensioned in such a way that the following operations can be executed while the video buffer is being read, but without the video buffer running empty: jumping J to the audio stream, loading S2 the audio buffer, jumping J to the subtitle stream, loading S3 the subtitle buffer and jumping J back to video stream. S1 is the time required to load the complete video buffer $b_1$, $\Delta b_1$ itself. The base buffers of audio and subtitle are enlarged in the same way by $\Delta b_2$ and $\Delta b_3$.
The buffer sizes can be calculated to:

$$Bi = b_i + \Delta b_i \qquad \text{(eq.1.0) Buffer size per stream}$$

$$B = \Sigma \, b_i \qquad \text{(eq.1.1) Total base buffer size}$$

$$\Delta B = \Sigma \, \Delta b_i \qquad \text{(eq.1.2) Total extension buffer size}$$

$$B_{\Sigma} = B + \Delta B = \Sigma b_i + \Sigma \, \Delta b_i \qquad \text{(eq.1.3) Total buffer size}$$

The buffer filling time for a single stream buffer is determined by the equation:

$$T_{fill;i} = \frac{B_i}{(R - r_j)} \qquad \text{(eq. 2)}$$

When accumulating all jump and filling times for three bit streams, a linear equation system (LES) can be set up, and the resulting bridge buffers $\Delta b_i$ can be determined. The resulting LES for N streams can be written in matrix form as:

$$
\begin{pmatrix} \Delta b_1 \\ \Delta b_2 \\ \cdot \\ \cdot \\ \Delta b_N \end{pmatrix} = \begin{pmatrix} \dfrac{1}{r_1} & \dfrac{1}{r_2 - R} & \cdot & \cdot & \dfrac{1}{r_N - R} \\ \dfrac{1}{r_1 - R} & \dfrac{1}{r_2} & & & \dfrac{1}{r_N - R} \\ \cdot & & \cdot & & \cdot \\ \cdot & & & \cdot & \cdot \\ \dfrac{1}{r_1 - R} & \dfrac{1}{r_2 - R} & & & \dfrac{1}{r_N} \end{pmatrix}^{-1} \begin{pmatrix} N \cdot T_{acc} - \sum\limits_{i \neq 1}^{N} \dfrac{b_i}{r_i - R} \\ N \cdot T_{acc} - \sum\limits_{i \neq 2}^{N} \dfrac{b_i}{r_i - R} \\ \cdot \\ \cdot \\ N \cdot T_{acc} - \sum\limits_{i \neq N}^{N} \dfrac{b_i}{r_i - R} \end{pmatrix} \qquad \text{(eq. 3)}
$$

To supply N OOM streams, the resulting pick-up jump frequency can be estimated to:

$$
f_{jump} \approx \frac{N}{\sum\limits_{i=1}^{N} (T_{acc} + T_{fill,i})} = \frac{1}{T_{acc} + \frac{1}{N} \sum\limits_{i=1}^{N} \dfrac{B_i}{(R - r_i)}} \qquad \text{(eq. 4)}
$$

Since the $r_i$ are variable bit rates (VBR), eq.4 is an estimation for an average value. Further, the effective jump frequency may be higher because the different buffers will not always run completely empty, i.e. the effective $B_i$ are smaller.

Eq.3 and eq.4 describe a simple round-robin scheduler: after having filled a buffer completely, the scheduler switches to the next buffer. This continues until all stream buffers have been served, and the scheduler starts a new loop through all the streams. To avoid worst-case buffer underflow when having high read data rates, the round-robin scheduling is done independently from the individual buffer fullness. This means a constant pick-up jump frequency, being higher than actually necessary.

According to the invention, the pick-up jump frequency can be reduced when the bridging stream buffers are further enlarged and another than the round-robin scheduler model is used. This other scheduler model, according to the invention, could be a free running scheduler as described by the following:

- every OOM stream has its own buffer,
- every OOM buffer is filled upon request, when reaching a threshold, e.g. "nearly empty",
- a queuing mechanism is used to handle concurrent requests, i.e. each request for filling an OOM buffer is queued once.

For the free running scheduler according to the invention, the resulting pick-up jump frequency is determined by accumulating the individual pick-up jump frequencies and is calculated by:

$$
f_{jump} = \sum_{i=1}^{N} f_i \qquad \text{(eq. 5)}
$$

Fig.1 b) shows a scheme of a further enlarged stream buffer. The buffer $b_1, \Delta b_1$ is extended by an extension buffer $bx_1$. While the extension buffer is being read, the pick-up is not used. This effects a reduction of the individual streams pick-up jump frequency, and thus influences the resulting pick-up jump frequency according to eq.5. Using an extension buffer changes eq.1.0, which is now

$$B_i = b_i + \Delta b_i + bx_i \qquad \text{(eq. 6)}$$

But the buffer extension $bx_i$ has two drawbacks, the first being that it requires more memory, and the second being that it influences the necessary bridge buffer $\Delta b_2$, $\Delta b_3$ for the other stream buffers, due to the additional fill time required for $bx_1$. Enlarging the other bridge buffers $\Delta b_2$, $\Delta b_3$ by adding extension buffers $bx_2$, $bx_3$ ensures an in time response of the free running scheduler for any stream buffer fill request. The best compromise for the size of the bridge buffers, according to the invention, is outlined in the following.

First the individual streams pick-up jump frequencies $f_i$ are determined. After the free running scheduler has filled the stream buffer $\Delta b_i + b_i + bx_i$ completely, the buffer keeps being read and runs empty. When reaching a threshold T, e.g. $\Delta b_i + b_i$, the buffer may send a refill request to the scheduler, and the scheduler queues the request. The stream buffer is further being emptied, until the scheduler serves the request. It is assumed for this example that typically half of the remaining buffer $(\Delta b_i + b_i)/2$ runs empty before the scheduler acts. The remaining buffer filling, at the time when the request is served, is shown in Fig.1 b) by the gray area F. The following calculation applies for the individual streams pick-up jump frequency:

$$f_i = (T_{fill,i} + T_{empty,i} + T_{acc})^{-1} \qquad \text{(eq. 7.1)}$$

$$f_i = \left( \frac{\dfrac{b_i + \Delta b_i}{2} + bx_i}{R - r_j} + \frac{\dfrac{b_i + \Delta b_i}{2} + bx_i}{r_j} + T_{acc} \right)^{-1} \qquad \text{(eq. 7.2)}$$

$$f_i = \frac{2 \cdot r_j \cdot (R - r_j)}{b_i \cdot R + \Delta b_i R + 2 \cdot bx_i \cdot R + 2 \cdot T_{acc} \cdot r_i \cdot R - 2 \cdot T_{acc} \cdot r_i^2} \qquad \text{(eq. 7.3)}$$

$T_{empty,i}$ is the time in which the buffer for stream i is being read, without being filled. Enlarging the extension buffers $bx_i$ as described by eq.5 and eq.7 can reduce the resulting pick-up jump frequency.

According to the invention it is particularly advantageous to enlarge the extension buffers $bx_i$ asymmetrically, i.e. select each extension buffer $bx_i$ individually, such that the highest pick-up jump frequency $f_{i,r=max}$ is a multiple of the resulting individual pick-up jump frequencies $f_{i,r\neq max}$. This is expressed by the following equations:

$$f_{i,r=max} = \lambda \cdot f_1 = \lambda \cdot f_2 = ... = \lambda \cdot f_{n,n\neq i} \, ... = \lambda \cdot f_N \qquad \text{(eq. 8.1)}$$

$$f_{Video} = \lambda \cdot f_{Audio} = \lambda \cdot f_{Subtitle} \qquad \text{(eq. 8.2)}$$

In eq.8.1, $f_1$ is a function of $bx_1$ etc., and $\lambda$ is the asymmetry factor. When the relations of eq.8.1 are chosen in such a way that the stream with the highest bit rate, typically the video stream, has the highest jump frequency $f_{i,r=max}$, then this leads to a reduction of the resulting pick-up jump frequency, while using the same total amount of extension buffer $B_\Sigma$ as previous scheduling systems. This optimizes the usage of extra buffer, and therefore saves the most bytes for extra buffer. The stream buffers for the lower bit rate streams are individually enlarged to meet the asymmetry factor $\lambda$.

Eq.8.2 is an example for a typical blu-ray disc application for OOM decoding of multimedia content, including e.g. HD video, audio and subtitle. When the three streams for video, audio and subtitle are read, and the buffers of the lower rated streams are enlarged according to the invention, then the video buffer can be filled $\lambda$ times before the audio and subtitle buffers need to be refilled. By this enlargement of buffer sizes for the audio and subtitle streams, the time between pick-up jumps can be longer, and thus the individual streams pick-up jump frequency lower. The $\lambda$ times filling of the video buffer in the meantime does not increase the pick-up jump frequency, as it requires only actuator movements of the pick-up, no jumps. Thus the result is a lowered pick-up jump frequency.

The improved resulting jump frequency can be calculated to:

$$f *_{jump} \leq f_{jump} = \sum_{i=1}^{N} f_i \qquad \text{(eq. 9.1)}$$

$$f *_{jump} = \min\left(\frac{N-1}{\lambda}\ ;\ 1\right) \cdot f_{r=\max} + \left(\frac{N-1}{\lambda}\right) \cdot f_{r=\max} \qquad \text{(eq. 9.2)}$$

In a typical application example, $f_{r=\max}$ corresponds to the video stream buffer. By combining eq.3 and eq.8.2 for three streams, a new LES can be constructed, containing further the values for the extension buffers $bx_2$, $bx_3$ of audio and subtitle. The LES is

$$(\Delta b_1\ \Delta b_2\ \Delta b_3\ bx_2\ bx_3) = M^{-1}(\lambda) \times v(\lambda) \qquad \text{(eq. 10.1)}$$

$$M(\lambda) = \begin{pmatrix} 1 & \dfrac{-r_1}{R-r_2} & \dfrac{-r_1}{R-r_3} & \dfrac{-r_1}{R-r_2} & \dfrac{-r_1}{R-r_3} \\[2ex] \dfrac{-r_2}{R-r_1} & 1 & \dfrac{-r_2}{R-r_3} & 0 & \dfrac{-r_2}{R-r_3} \\[2ex] \dfrac{-r_3}{R-r_1} & \dfrac{-r_3}{R-r_2} & 1 & \dfrac{-r_3}{R-r_2} & 0 \\[2ex] 0 & \dfrac{R}{r_2 \cdot (R-r_2)} & \dfrac{-R}{r_3 \cdot (R-r_3)} & \dfrac{2 \cdot R}{r_2 \cdot (R-r_2)} & \dfrac{-2 \cdot R}{r_3 \cdot (R-r_3)} \\[2ex] \dfrac{R}{r_1 \cdot (R-r_1)} & 0 & \dfrac{-R}{\lambda \cdot r_3 \cdot (R-r_3)} & 0 & \dfrac{-2 \cdot R}{\lambda \cdot r_3 \cdot (R-r_3)} \end{pmatrix} \qquad \text{(eq. 10.2)}$$

$$v(\lambda) = \begin{pmatrix} r_1 \cdot 3 \cdot T_{acc} + \dfrac{r_1 \cdot b_2}{R - r_2} + \dfrac{r_1 \cdot b_3}{R - r_3} \\[2ex] r_2 \cdot 3 \cdot T_{acc} + \dfrac{r_2 \cdot b_1}{R - r_1} + \dfrac{r_2 \cdot b_3}{R - r_3} \\[2ex] r_3 \cdot 3 \cdot T_{acc} + \dfrac{r_3 \cdot b_1}{R - r_1} + \dfrac{r_3 \cdot b_2}{R - r_2} \\[2ex] \dfrac{-R \cdot b_2}{r_2 \cdot (R - r_2)} + \dfrac{R \cdot b_3}{r_3 \cdot (R - r_3)} \\[2ex] 2 \cdot T_{acc} \cdot \left(\dfrac{1}{\lambda} - 1\right) - \dfrac{R \cdot b_1}{r_1 \cdot (R - r_1)} + \dfrac{R \cdot b_3}{\lambda \cdot r_3 \cdot (R - r_3)} \end{pmatrix} \qquad \text{(eq. 10.3)}$$

Both the matrix $M(\lambda)$ and the disturbing $v(\lambda)$ are functions of the asymmetry $\lambda$. But $\lambda$ cannot be chosen arbitrarily. Since it modifies the time that is required to fill the other buffers, it is limited by the condition

$$T_{empty,i} - 3 \cdot T_{acc} - \sum_{n=1, n \neq i}^{N} T_{fill,n} \geq 0 \qquad \text{(eq. 11)}$$

This means that the time that can be bridged by a buffer $T_{empty,i}$ without refilling must be equal or higher than the time that is required to access the other streams, read them and store them to their respective buffers. Using the LES eq.10, and considering the conditions of eq.11, the bridge buffers $\Delta b_i$ and the extension buffers $bx_i$ can be determined.

The gain reached by the asymmetry $\lambda$ for a typical application, like a movie from blu-ray disc, is depicted in Fig.2. It shows the resulting pick-up jump frequency $f_{skip,i}$ of a scheduling system that uses equally shared extension buffers, as compared to the resulting pick-up jump frequency $f^*_{skip,i}$ of a system according to the invention that uses asymmetric extension buffers, both being functions of the variable $\lambda$. For all shown reasonable values of $\lambda$, i.e. $\lambda$ being 2 or more, the pick-up jump frequency for the inventive scheduler is lower than for the conventional scheduler. The diagram is based on typical values for parameters, i.e. $T_{acc}$=0.8s, R=54Mbps, $r_{Video}$=40Mbps, $r_{Audio}$=640kbps, $r_{Subtitle}$=2kbps.

Another gist of the invention is the reduction of switching delay time for seamless video angle switches. For OOM decoding a seamless video angle switch can be compared to a change of the video stream file. This must be done seamlessly for the user, i.e. without any picture artifacts, blanking or pausing in video. Seamless video angle switches are possible only at specific byte positions in the stream. Those positions are indicated by navigation information related to the stream, e.g. group-of-picture (GOP) boundaries for the case of MPEG.

Fig.3 shows a conventional video stream buffer, being filled with the pick-up bit rate R and simultaneously being emptied with the decoding bit rate $r_i$. On average, the filling rate R must be larger or equal than the decoding bit rate $r_i$, to prevent the buffer from running empty. When reproducing a video, a stream related to a first view angle A1 is loaded into the buffer and reproduced. After a certain time of reproduction, the user requests a video angle change. The buffer has at this time a remaining fill level L1. When the scheduler has received this request and the video buffer is to be refilled again, the pick-up will not immediately jump to the other video stream related to the second view angle A2. Instead, the pick-up continues reading further bytes of the first view angle A1, until a seamless connection is detected in the bit stream; at this time the buffer has a new fill level L2, containing a video stream related to the first view angle A1. After reaching the seamless connection, the pick-up may switch the video input stream by jumping to the video stream related to the second view angle A2. Then this stream is loaded into the video buffer, on top of level L2.

In the meantime the decoder is reading data from the video bit buffer at the read position L0, and thus reduces the filling of the buffer, i.e. the levels L1 and L2 are continuously moving down. The effective delay time before switching the video angle is in this scenario determined by the buffer fullness L1 when the video angle change request reaches the scheduler, the length of the new loaded sequence related to the old video angle A1 till a seamless connection is reached, filling the buffer up to L2, and the video decoding bit rate $r_i$. The effective delay time for the user is determined by the amount of buffer fullness L2-L0 and the video bit rate, as described by

$$T_{delay} = \frac{B_{L2-L0}}{r_i} \qquad\qquad (eq.12)$$

To reach a small delay, it is useful to keep the video bit buffer small. This, however, increases the pick-up jump frequency, as described above. Also, the delay time may vary noticeably because the buffer fullness L1 at the time of a request is not determined. An improvement of video angle switching, and advantageously for every channel switching, can be reached by the proposed invention.

Minimizing the buffer size $B_{L2-L0}$ lowers the effective delay time $T_{delay}$. According to the invention, this is reached by the introduction of angle switch labels within the video buffer. Angle switch labels mark possible seamless connection points located within the bit stream. When a scheduler according to the invention fills the video bit buffer, it evaluates the possible seamless connection entry points, given by the related navigation information, and marks the corresponding bit buffer locations with a label. This may be implemented in various ways, e.g. by adding the label to the buffer contents. While the video bit stream is read for decoding, the labels are logically moving down, always being associated to the same seamless connection. In practice, however, a ring buffer or a FIFO may be used, which effectively does not move any bytes in the buffer, and thus the physical position, or address, of the labels remains the same. Therefore it is also possible to store the label as the address of a seamless connection position, e.g. in a separate buffer, and locate the seamless connection entry point by comparing the address representing the label with the data read address.

Advantageously, the angle switch labels can be used to easily determine those parts of the video buffer which are obsolete in case of an angle change being requested, and which can be removed without the risk of a buffer under run. According to the invention, the stream switch algorithm described in the following can be employed.

Fig.4 a) shows an exemplary video buffer, being filled with the pick-up bit rate R and being read with the decoder bit rate $r_i$. When a user requests a video angle change from the current angle A1 to another angle A2, the scheduler evaluates the angle switch labels SL it has currently stored. At the time when the request is processed, the buffer is filled up to a current filling level L2, and may contain various angle switch labels SL. Moving the pick-up to the position where the new video bit stream can be read takes a worst-case minimum time $t_{min}$. During this time $t_{min}$ the video buffer is constantly being read, and may not run empty since the angle switch should be seamless. The buffer space that is required for the amount of data that will be read during that time $t_{min}$ calculates generally according to the following relation:

$$buffer = r_i \cdot time \qquad (\text{eq. } 13)$$

Since $r_i$ is usually variable, due to VBR, the highest possible rate can be used to cope with the worst case. According to the invention, the buffer size calculated by eq.13 is added to the current buffer read position L0 to calculate the earliest possible switch position L1. Further, the first angle switch label L2* found above this position L1 is the earliest possible angle switch position. This specific angle switch label L2* is called "bonding label" herein. When the scheduler starts the next video buffer filling process, it may load the new video content of the requested angle A2, starting from the bonding label L2*. Thus, a part of the old buffer content relating to angle A1, namely from the bonding label L2* to the current buffer filling level L2, is deleted, and substituted by the new content relating to angle A2. This situation is shown in Fig.4 b). The effective delay time for the user is determined by the remaining amount of data relating to the old angle A1 and the video bit rate, and calculates to:

$$T^*_{delay} = \frac{B_{L2^*-L0}}{r_i} \qquad (\text{eq. } 14)$$

Since $B_{L2^*-L0}$ in eq. 14 is less than $B_{L2-L0}$ in eq. 12, and $r_i$ is the same in both equations, the delay time $T^*_{delay}$ is reduced.

Which of the switch labels can be used as bonding label depends on the minimal possible switching time $t_{min}$. This is the time between the pick-up starting to move to the new video stream and the new video data being buffered. It comprises the pick-up access time $T_{acc}$ mentioned before and intermediate processing times, which are very small compared to $T_{acc}$. Therefore the delay time before actually switching the video angle, as described in eq.14, can be further reduced by reducing the minimal possible switching time $t_{min}$. According to the invention this can be achieved by modifying the free running scheduler model, as described in the following. When the inventive scheduler receives an angle switch request, it may analyze which stream buffer fill requests are registered in the queue. Depending on the queued fill requests, it may determine the minimum time $t_{min}$ and select the optimal bonding label.

If the buffer contains no switch label, the pick-up may continue to read the old data stream until a switch label is detected, and then switch to the new data stream.

Advantageously, the described mechanism for seamless switching is not restricted to video angle switching, but can be used for any kind of video data switching or user-manipulated reproduction of video data, e.g. if a video scene may be replaced by another video scene. Further, it can be used not only for video data streams, but also for other data streams. Especially, the same mechanism may be used for audio data streams, e.g. to adopt audio reproduction in case of a video angle switch. Moreover, it is possible that various types of switch labels exist, referring only to specific data streams and containing a corresponding indication. In this case the inventive method can be applied analogously.

In a further embodiment of the invention, the processing of requests may be modified even if they are already in the queue when an angle switch request occurs. The scheduler may execute all requests that are in the queue, but stop their execution prematurely, i.e. before the stream buffer is completely filled. This saves more time and decreases the video angle switching delay time. The interrupted stream buffer fill process must however obey to

$$T_{\text{fill,min}} = \sum_{i=1}^{in\ queue} \left( T_{acc} + \frac{b_i + \Delta b_i}{r_i} \right) \qquad (\text{eq. } 15)$$

Eq.15 means that at least the base buffer $b_i$ and the bridge buffer $\Delta b_i$ must have been be filled before the stream buffer fill request is prematurely interrupted.

Another advantage of the scheduler according to the invention is a special strategy to start the complete OOM decoding of N streams. The normal delay at start-up results from the accumulation of N pick-up jumps and N stream buffer filling times. By using eq.2 and eq.6, the start-up delay time is

$$T_{startup} = \sum_{i=1}^{N} \left( T_{acc} + \frac{b_i + \Delta b_i + bx_i}{R} \right) \qquad \text{(eq. 16)}$$

The denominator is larger than in eq.2 because the decoding is not running yet, and therefore the buffers are filled quicker.

The optimization of the start-up procedure according to the invention consists of two improvements that are independent from each other, and that are described in the following.

The first improvement concerns the amount of buffer to fill during start-up. When the free running scheduler receives a start up command, it is not loading the OOM stream buffers completely. Similar to the angle switch algorithm described above it fills only a part of the OOM stream buffers, and the bit stream with the highest bit rate is served last. Taking the application example above, the scheduler at start-up fills the OOM stream buffers for the audio or subtitle first, and then fills the OOM video stream buffer. Further, it needs to load only the base buffer $b_i$ and the bridge buffer $\Delta b_i$ for all but the last OOM stream. Also the OOM stream buffer refill requests are set for all but the last OOM stream buffer. Then the last stream buffer may be loaded completely, but decoding for all streams may already start when only the base buffer portion $b_i$ of the last OOM stream buffer has been filled. Thus start-up delay is

$$T*_{startup} = N \cdot T_{acc} + \frac{b_{i=r_{i,max}}}{R} + \sum_{i=1, i \neq r_{i,max}}^{N-1} \frac{b_i + \Delta b_i}{R} \qquad \text{(eq. 17)}$$

After this start-up procedure the free running scheduler may work normally as described before, and all queued buffer fill requests may be bridged by the bridge buffers $\Delta b_i$.

The second improvement for a start-up procedure according to the invention concerns the sequence of the OOM stream buffers, i.e. the order in which all but the last OOM stream buffer are loaded. A dominant part of eq.17 is the pick-up access time $T_{acc}$ that is a physical parameter, namely in the worst case the time required for a full stroke jump, and thus cannot be reduced. According to the invention, the first product of eq.17 can be reduced, since the first addend "$N \cdot T_{acc}$" is a worst-case value. It can be minimized in the following way.

When the disc is initially read, the reading device determines which files are contained, and their physical location on the disc. Therefore the scheduler may have this information, and select the OOM stream buffer filling order dependant from the physical location of the OOM stream files on the disc. The scheduler may start with the OOM stream buffer at the most outer or most inner physical disc location, depending on which is nearer to the current pick-up position. After that the scheduler loads the physically nearest OOM stream in its respective OOM stream buffer. This is repeated until only the last stream is left, being the one with the highest bit rate. The OOM stream with the highest bit rate is loaded last, independent from its physical location on the disc.

Advantageously, the pick-up will not move more than twice across the full disc when using this start-up procedure. This corresponds to two full stroke jumps. The resulting start-up delay is

$$T**_{startup} = 2 \cdot T_{acc} + \frac{b_{i=r_{i,max}}}{R} + \sum_{i=1, i \neq r_{i,max}}^{N-1} \frac{b_i + \Delta b_i}{R} \qquad \text{(eq. 18)}$$

Eq. 18 shows that the dominating addend "$N \cdot T_{acc}$" from eq. 17 is decreased for $N > 2$ and becomes independent from the number of streams treated, thus reducing start-up time.

The invention is also applicable in systems where not all streams require buffering. E.g. there could be another data stream included on the medium, containing data that are not repetitively or not periodically read, e.g. only once at the beginning of a presentation, and that can be processed at the pick-up data rate, and therefore require no buffering.

Further, multiple video streams may be available for angle change, and the buffered labels may contain a mark defining possible video streams they refer to. Thus a hierarchy may be achieved, e.g. each of the alternative view angles may contain alternative zoom levels, zoom targets, color settings or the like. Also different time raster for different view angles may thus be implemented.

Moreover, the disclosed method may also be used for inserting e.g. an additional video stream at a defined position of the presentation, like multi-story technique, even if the presentation data are already stored in the buffer. The additional video stream may also come from another source than the optical storage medium, e.g. the internet.

The inventive method can be employed e.g. by all types of media reproduction devices containing an optical pick-up, especially Blu-ray disc players.

Advantageously, the method disclosed herein can also be used to optimize the partitioning of a given amount of buffering space for the described application.

## Claims

1. A method for buffering data streams read from a storage medium, wherein

   - the data streams are distributed to more than one file on said storage medium;
   - a data stream may contain labels marking entry points for seamlessly switching to data from another stream;
   - also the labels are buffered, such that they are associated with the buffered data, and with the entry point for seamless switching within the buffered data; and
   - an entry point for seamless switching is determined by selecting the first label (L2*) that appears after a minimum time ($t_{min}$), independent from the current filling (L2) of the buffer.

2. Method according to claim 1, wherein the minimum time ($t_{min}$) depends on the buffer filling rate (R), the buffer read rate ($r_i$), or the time between the pick-up starting to move to the new stream and the new data being buffered.

3. Method according to any of the previous claims, wherein said buffered data may be read continuously after an initial filling procedure.

4. Method according to any of the previous claims, wherein said data stream contains video or audio data.

5. Method according to any of the previous claims, wherein said labels refer only to specific new data streams, and contain an indication specifying to which type of new stream they refer.

6. Method according to any of the previous claims, wherein not all buffered data streams are read from said storage medium.

7. Method according to any of the previous claims, wherein said storage medium is an optical storage medium.

8. Apparatus for buffering data streams read from a storage medium, wherein the data streams are distributed to more than one file on said storage medium and a data stream may contain labels marking entry points for seamlessly switching to data from another stream, the apparatus comprising:

   - means for buffering the labels, such that the labels are associated with the buffered data, and with the entry point for seamless switching within the buffered data; and
   - means for determining an entry point for seamless switching by selecting the first label (L2*) that appears after a minimum time ($t_{min}$), independent from the current filling (L2) of the buffer.

9. Apparatus according to claim 8, wherein not all buffered data streams are read from said storage medium.

10. Apparatus according to claim 8 or 9, wherein said storage medium is an optical storage medium.

| S1 | | J | S2 | J | S3 | J | S1 |
|----|----|---|----|---|----|---|----|

$$\underbrace{\hspace{6cm}}_{b_1} \underbrace{\hspace{2cm}}_{\Delta b_1}$$

$$\underbrace{\hspace{8cm}}_{B_1}$$

**a)**

| S1 | | J | S2 | J | S3 | J | | | S1 |
|----|----|---|----|---|----|---|---|---|----|

F          T

$$\underbrace{\hspace{6cm}}_{b_1} \underbrace{\hspace{2cm}}_{\Delta b_1} \underbrace{\hspace{2cm}}_{bx_1}$$

$$\underbrace{\hspace{9cm}}_{B_1'}$$

**b)**

**Fig. 1**

$[Hz]$   $f_{skip,i}(\lambda)$

$f^*_{skip,i}(\lambda)$

$\lambda$

**Fig.2**

11

**Fig.3**

a) b)

**Fig.4**

**European Patent**

**Office**

**EUROPEAN SEARCH REPORT**

Application Number

EP 03 00 7593

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 847 198 A (MATSUSHITA ELECTRIC IND CO LTD) 10 June 1998 (1998-06-10)<br>* figures 20,21,48 *<br>* page 23, line 45 - line 52 *<br>* page 14, line 47 - line 57 *<br>* page 32, line 36 - line 49 *<br>* page 36, line 1 - line 8 *<br>* page 53, line 7 - line 10 *<br>--- | 1-4,7,8,10 | G11B20/10 |
| Y | EP 0 798 722 A (PIONEER ELECTRONIC CORP) 1 October 1997 (1997-10-01)<br>* figures 5,7,18B-20A *<br>* page 8, line 23 - line 40 *<br>* page 10, line 18 - line 33 *<br>* page 13, line 8 - line 17 *<br>* page 17, line 2 - line 39 *<br>--- | 1-4,7,8,10 | |
| A | EP 1 011 268 A (MATSUSHITA ELECTRIC IND CO LTD) 21 June 2000 (2000-06-21)<br>* column 13, line 9 - line 13 *<br>* paragraph [0062] *<br>* paragraph [0113] - paragraph [0123] *<br>--- | 1-10 | |
| A | US 5 543 861 A (HARRADINE VINCENT C  ET AL) 6 August 1996 (1996-08-06)<br>----- | | |

TECHNICAL FIELDS SEARCHED (Int.Cl.7)

G11B

The present search report has been drawn up for all claims

| Place of search | Date of completion of the search | Examiner |
|---|---|---|
| THE HAGUE | 2 December 2003 | Ogor, M |

EPO FORM 1503 03.82 (P04C01)

**EP 1 465 186 A1**

## ANNEX TO THE EUROPEAN SEARCH REPORT
## ON EUROPEAN PATENT APPLICATION NO.

EP 03 00 7593

02-12-2003

| Patent document cited in search report | | Publication date | Patent family member(s) | | Publication date |
|---|---|---|---|---|---|
| EP 0847198 | A | 10-06-1998 | DE | 69602273 D1 | 02-06-1999 |
| | | | DE | 69602273 T2 | 16-12-1999 |
| | | | EP | 0847198 A1 | 10-06-1998 |
| | | | HK | 1011906 A1 | 12-05-2000 |
| | | | CN | 1197572 A ,B | 28-10-1998 |
| | | | DE | 69614889 D1 | 04-10-2001 |
| | | | DE | 69614889 T2 | 11-04-2002 |
| | | | EP | 0918438 A2 | 26-05-1999 |
| | | | WO | 9713365 A1 | 10-04-1997 |
| | | | JP | 3350542 B1 | 25-11-2002 |
| | | | JP | 2003045127 A | 14-02-2003 |
| | | | JP | 3377788 B1 | 17-02-2003 |
| | | | JP | 2003087737 A | 20-03-2003 |
| | | | JP | 3377789 B1 | 17-02-2003 |
| | | | JP | 2003087738 A | 20-03-2003 |
| | | | JP | 3350543 B1 | 25-11-2002 |
| | | | JP | 2003087739 A | 20-03-2003 |
| | | | JP | 3350544 B1 | 25-11-2002 |
| | | | JP | 2003087740 A | 20-03-2003 |
| | | | JP | 3350545 B1 | 25-11-2002 |
| | | | JP | 2003087741 A | 20-03-2003 |
| | | | JP | 3377790 B1 | 17-02-2003 |
| | | | JP | 2003087742 A | 20-03-2003 |
| | | | SG | 80607 A1 | 22-05-2001 |
| | | | US | 5784528 A | 21-07-1998 |
| | | | US | 6181872 B1 | 30-01-2001 |
| EP 0798722 | A | 01-10-1997 | JP | 9259573 A | 03-10-1997 |
| | | | CN | 1173698 A | 18-02-1998 |
| | | | DE | 69725638 D1 | 27-11-2003 |
| | | | EP | 1347454 A2 | 24-09-2003 |
| | | | EP | 0798722 A2 | 01-10-1997 |
| | | | US | 5966352 A | 12-10-1999 |
| EP 1011268 | A | 21-06-2000 | JP | 11191895 A | 13-07-1999 |
| | | | EP | 1011268 A1 | 21-06-2000 |
| | | | CA | 2273891 C | 12-06-2001 |
| | | | CA | 2340314 A1 | 11-06-1998 |
| | | | CN | 1247004 A | 08-03-2000 |
| | | | CN | 1269941 T | 11-10-2000 |
| | | | DE | 69717139 D1 | 19-12-2002 |
| | | | DE | 69717139 T2 | 02-10-2003 |
| | | | EP | 1094674 A2 | 25-04-2001 |
| | | | EP | 0944269 A1 | 22-09-1999 |
| | | | WO | 9825413 A1 | 11-06-1998 |
| | | | WO | 9912348 A1 | 11-03-1999 |

14

**EP 1 465 186 A1**

ANNEX TO THE EUROPEAN SEARCH REPORT
ON EUROPEAN PATENT APPLICATION NO.                    EP 03 00 7593

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2003

| Patent document cited in search report | | Publication date | Patent family member(s) | | Publication date |
|---|---|---|---|---|---|
| EP 1011268 | A | | JP | 11150706 A | 02-06-1999 |
| | | | KR | 2000057426 A | 15-09-2000 |
| | | | US | 6573819 B1 | 03-06-2003 |
| US 5543861 | A | 06-08-1996 | GB | 2287845 A | 27-09-1995 |
| | | | JP | 7272404 A | 20-10-1995 |

EPO FORM P0459

For more details about this annex : see Official Journal of the European Patent Office, No. 12/82

15